# EUROPEAN PATENT APPLICATION

(11) **EP 4 559 301 A1**
(43) Date of publication of application: **28.05.2025**
(21) Application number: 24201239.1
(22) Date of filing: 19.09.2024
(51) Int. Cl.: A01D 34/00, G01C 9/00, G01C 21/00, G01C 21/16, A01D 34/86

(54) **SELF-PROPELLED DEVICE AND CONTROL METHOD THEREFOR**

(30) Priority: 22.11.2023 CN 202311574467; 22.11.2023 CN 202311572907
(71) Applicant: Nanjing Chervon Industry Co., Ltd., Nanjing, Jiangsu 211106 (CN)
(72) Inventor: HAN, Zhiyang, Nanjing (CN)
(74) Representative: Sun, Yiming

(57) **Abstract**

Provided is a self-propelled device. The self-propelled device includes a body; a traveling wheel assembly configured to support the body; an inertial measurement unit (IMU) disposed in the body and including at least one of an accelerometer and a gyroscope; and a controller electrically connected to the IMU and configured to control the self-propelled device to travel; receive inertial data from the IMU; and statistically analyze the inertial data received within a first time window and adjust a positioning parameter of the IMU according to a statistical result. The positioning parameter of the inertial data is adjusted according to the statistical result of the inertial data of the self-propelled device, and the positioning of the self-propelled device calculated using the adjusted positioning parameter is more accurate.

## Description

### TECHNICAL FIELD

The present application relates to a device and a control method and, in particular, to a self-propelled device and a control method therefor.

### BACKGROUND

A self-propelled device, such as a self-propelled mower, generally mows the grass outdoors. Due to changes in outdoor weather and seasons, the surface conditions of the lawn may change significantly.

In the related art, an inertial measurement unit (IMU) in the self-propelled mower may be used to collect inertial data, and then the self-propelled mower is positioned by fusing the inertial data with data of other modalities.

However, different undulations of the lawn surface affect the collected inertial data, easily causing inaccurate positioning of the self-propelled mower.

If the angle of inclination of a smart mower is too large during the mowing process, the smart mower may easily topple over, causing the smart mower to stop operating or the blade to be exposed outside, resulting in some unsafe conditions. Therefore, the smart mower needs to be able to identify slopes.

In the related art, the slope angle may be identified by using the image that is in front along the traveling direction and collected by the smart mower.

However, when the preceding manner is used to deal with user lawns with diverse terrains, the slope angle identification accuracy needs to be further improved. For example, the smart mower passing through the same slope on different routes may have different angles of inclination. When the angle of inclination exceeds a certain range, the mower may easily topple over.

This part provides background information related to the present application, and the background information is not necessarily the existing art.

### SUMMARY

An object of the present application is to solve or at least alleviate part or all of the preceding problems.

Therefore, an object of the present application is to provide a self-propelled device with higher positioning accuracy.

To achieve the preceding object, the present application adopts the technical solutions below.

A self-propelled device includes a body, a traveling wheel assembly, an IMU, and a controller. The traveling wheel assembly is configured to support the body. The IMU is disposed in the body and includes at least one of an accelerometer and a gyroscope. The controller is electrically connected to the IMU and configured to perform the following. The self-propelled device is controlled to travel. Inertial data is received from the IMU. The inertial data received within a first time window is statistically analyzed and a positioning parameter of the IMU is adjusted according to a statistical result.

In some examples, the statistical result reflects the flatness of a road section passed by the self-propelled device within the first time window.

In some examples, the positioning parameter is the noise of the inertial data.

In some examples, the positioning parameter is the weight of the inertial data when the inertial data is fused with data of other modalities for positioning.

In some examples, the value range of the first time window is greater than or equal to a first duration threshold and less than or equal to a second duration threshold. The first duration threshold is less than the second duration threshold. In some examples, the first time window is determined according to the traveling speed of the self-propelled device.

A positioning method for a self-propelled device includes the steps below.

A positioning request is acquired, and inertial data of the self-propelled device within a first time window is acquired according to the positioning request. The inertial data is statistically analyzed and a positioning parameter corresponding to the inertial data is adjusted according to a statistical result. The position of the self-propelled device is determined according to the inertial data and the positioning parameter. A positioning device for a self-propelled device includes an acquisition unit and a processing unit. The acquisition unit is used for acquiring a positioning request and acquiring inertial data of the self-propelled device within a first time window according to the positioning request. The processing unit is used for statistically analyzing the inertial data and adjusting a positioning parameter corresponding to the inertial data according to a statistical result. The processing unit is further used for determining the position of the self-propelled device according to the inertial data and the positioning parameter.

An electronic device is provided. The electronic device includes at least one processor and a memory communicatively connected to the at least one processor. The memory stores a computer program executable by the at least one processor, and the computer program is executed by the at least one processor to cause the at least one processor to perform the positioning method for a self-propelled device according to any example of the present application.

A computer-readable storage medium is provided. The computer-readable storage medium stores a computer instruction for causing a processor to perform the positioning method for a self-propelled device according to any example of the present application.

The benefit of the present application is that the self-propelled device may be positioned using the inertial data. The bumpy surface conditions in the driving region of the self-propelled device affect the accuracy of the inertial data collected by the IMU and thus affect the positioning accuracy of the self-propelled device. The statistical result of the inertial data may reflect the bumpy surface conditions. Therefore, in this solution, the positioning parameter of the inertial data is adjusted according to the statistical result of the inertial data of the self-propelled device so that the impact of surface bumps on positioning can be minimized; and the self-propelled device is positioned through the inertial data and the adjusted positioning parameter, thereby improving the positioning accuracy.

Therefore, an object of the present application is to provide a smart mower that has higher slope angle identification accuracy when dealing with user lawns with diverse terrains.

To achieve the preceding object, the present application adopts the technical solutions below.

A self-propelled device includes a body, a traveling wheel assembly, a vision sensor, an attitude sensor, and a controller. The traveling wheel assembly is configured to support the body. The vision sensor is configured to acquire an image in a traveling direction of the self-propelled device. The attitude sensor is configured to acquire the attitude of the self-propelled device. The controller is electrically connected to the vision sensor and the attitude sensor. The controller is configured to calculate a first angle of inclination of the ground in the traveling direction of the self-propelled device according to the image, calculate a second angle of inclination of the ground in conjunction with the first angle of inclination and the attitude, and control the traveling wheel assembly according to the second angle of inclination.

A control method for a self-propelled device includes the steps below.

The attitude of the self-propelled device is acquired through an attitude sensor. An image in a traveling direction of the self-propelled device is acquired through a vision sensor. A first angle of inclination of the ground in the traveling direction of the self-propelled device is calculated according to the image. A second angle of inclination of the ground is calculated in conjunction with the first angle of inclination and the attitude, and according to the second angle of inclination, whether the self-propelled device travels along the traveling direction is controlled.

In some examples, the first angle of inclination is a relative angle of inclination of the ground relative to the self-propelled device, and the second angle of inclination is an absolute angle of inclination of the ground relative to a horizontal plane.

In some examples, the vision sensor includes at least one of a time-of-flight (ToF) depth camera, an infrared ray (IR) structured-light camera, and a binocular camera.

In some examples, a controller establishes a depth image from the image, extracts a ground point cloud from the depth image, and acquires the first angle of inclination through the ground point cloud.

In some examples, when the second angle of inclination is greater than or equal to a first threshold, a controller determines that the ground in the traveling direction of the self-propelled device is a non-safe region and changes the traveling direction.

In some examples, when the second angle of inclination is less than the first threshold, the controller determines that the ground in the traveling direction of the self-propelled device is a safe region and maintains the traveling direction.

In some examples, the first threshold is determined according to the friction of the ground.

In some examples, the traveling direction of the self-propelled device is the front of the self-propelled device.

In some examples, the attitude sensor is an accelerometer disposed in a body of the self-propelled device.

A control method for a self-propelled device includes the steps below.

The attitude of the self-propelled device is acquired, and an image in a traveling direction of the self-propelled device is acquired. A first angle of inclination of the ground in the traveling direction of the self-propelled device is calculated according to the image. A second angle of inclination of the ground is calculated in conjunction with the first angle of inclination and the attitude, and according to the second angle of inclination, whether to travel along the traveling direction is determined.

A control device for a self-propelled device includes an acquisition unit, a processing unit, and a control unit. The acquisition unit is used for acquiring the attitude of the self-propelled device and acquiring an image in a traveling direction of the self-propelled device. The processing unit is used for calculating a first angle of inclination of the ground in the traveling direction of the self-propelled device according to the image. The processing unit is further used for calculating a second angle of inclination of the ground in conjunction with the first angle of inclination and the attitude. The control unit is used for determining whether to travel along the traveling direction according to the second angle of inclination.

An electronic device is provided. The electronic device includes at least one processor and a memory communicatively connected to the at least one processor. The memory stores a computer program executable by the at least one processor, and the computer program is executed by the at least one processor to cause the at least one processor to perform the control method for a self-propelled device according to any example of the present application.

A computer-readable storage medium is provided. The computer-readable storage medium stores a computer instruction for causing a processor to perform the control method for a self-propelled device according to any example of the present application.

The benefit of the present application lies in that: in conjunction with the attitude of the self-propelled device, the second angle of inclination is obtained according to the first angle of inclination, thereby improving the slope angle identification accuracy.

### BRIEF DESCRIPTION OF DRAWINGS

FIG. 1 is a schematic diagram of a working scenario of a self-propelled mower according to an example of the present application.
FIG. 2 is a structural view of a self-propelled mower according to an example of the present application.
FIG. 3 is a structural diagram of a self-propelled mower according to an example of the present application.
FIG. 4 is a schematic diagram of a slope detection scenario of a self-propelled device according to an example of the present application.
FIG. 5 is a flowchart of a control method for a self-propelled device according to an example of the present application.
FIG. 6 is a flowchart of a point cloud-based slope detection algorithm according to an example of the present application.
FIG. 7 is a schematic view of a lawn image according to an example of the present application.
FIG. 8 is a flowchart of a control method for a self-propelled mower according to an example of the present application.
FIG. 9 is a flowchart of a smart mowing decision-making algorithm according to an example of the present application.
FIG. 10 is a schematic view of a positioning scenario in which a self-propelled device travels on the lawn according to an example of the present application.
FIG. 11 is a flowchart of a positioning method for a self-propelled device according to an example of the present application.
FIG. 12 is a flowchart of a positioning parameter adjustment algorithm based on IMU data statistics according to an example of the present application.
FIG. 13 is a flowchart of a model training method for lawn image processing according to an example of the present application.
FIG. 14A to 14D is a schematic view of blurring a lawn image to be trained according to an example of the present application, FIG. 14A is an original image of the lawn image, FIG.14B is an image of the original image after Gaussian blur processing, FIG.14C is an image of the original image after Mean blur processing, and FIG.14D is an image of the original image after Median blur processing.
FIG. 15 is a flowchart of a lawn image processing method according to an example of the present application.
FIG. 16 is a flowchart of a model training method based on data enhancement according to an example of the present application.
FIG. 17 is a schematic view of a reference object according to an example of the present application.
FIG. 18 is a flowchart of a control method for a self-propelled mower according to an example of the present application.
FIG. 19 is a flowchart of a method for establishing a feature transformation benchmark based on a lawn marker according to an example of the present application.
FIG. 20 is a structural diagram of an electronic device for performing a method according to an example of the present application.

### DETAILED DESCRIPTION

Before any example of the present application is explained in detail, it is to be understood that the present application is not limited to its application to the structural details and the arrangement of components set forth in the following description or illustrated in the preceding drawings.

In the present application, the terms "comprising", "including", "having", or any other variation thereof are intended to cover an inclusive inclusion such that a process, method, article, or device including a series of elements includes not only those series of elements, but also other elements not expressly listed, or elements inherent in the process, method, article, or device.

In the present application, the term "and/or" is used for describing the association relationship between associated objects, which means that three types of relationships may exist. For example, A and/or B may indicate that A exists alone, A and B exist simultaneously, and B exists alone. In addition, the character "/" in the present application generally indicates the "and/or" relationship between the associated objects before and after the character "/".

In the present application, the terms "connection", "combination", "coupling", and "mounting" may be the direct connection, combination, coupling, or mounting and may also be the indirect connection, combination, coupling, or mounting. Among them, for example, direct connection means that two parts or assemblies are connected together without intermediate pieces, and indirect connection means that two parts or assemblies are separately connected to at least one intermediate piece and the two parts or assemblies are connected to each other by the at least one intermediate piece. In addition, "connection" and "coupling" are not limited to physical or mechanical connections or couplings and may include electrical connections or couplings.

In the present application, it is to be understood by those of ordinary skill in the art that a relative term (for example, "about", "approximately", or "basically") used in conjunction with quantities or conditions is inclusive of the stated value and has the meaning indicated by the context. For example, the relative term includes at least a degree of error associated with the measurement of a particular value, a tolerance caused by manufacturing, assembly, and use associated with the particular value, and the like. Such a relative term should also be considered as disclosing the range defined by the absolute values of the two endpoints. The relative term may refer to that an indicated value is added or reduced by a certain percentage (such as 1%, 5%, 10%, or more). A value not modified by the relative term should also be disclosed as a particular value with a tolerance. In addition, when expressing a relative angular position relationship (for example, basically parallel or basically perpendicular), "basically" may refer to that a certain degree (such as 1 degree, 5 degrees, 10 degrees, or more) is added to or subtracted from the indicated angle.

In the present application, those of ordinary skill in the art will understand that a function implemented by an assembly may be implemented by one assembly, multiple assemblies, one part, or multiple parts. Similarly, a function implemented by a part may be implemented by one part, one assembly, or a combination of parts.

In the present application, the terms "up", "down", "left", "right", "front", "rear", and other orientation words are described based on the orientation or positional relationship shown in the drawings and should not be understood as limitations to the examples of the present application. In addition, in this context, it also needs to be understood that when it is mentioned that an element is connected "above" or "below" another element, the element not only can be directly connected "above" or "below" the other element but also can be indirectly connected "above" or "below" the other element through an intermediate element. Further, it should be understood that orientation words such as the upper side, lower side, left side, right side, front side, and rear side not only represent perfect orientations but also may be understood as lateral orientations. For example, the lower part may include directly below, lower left, lower right, lower front, and lower back.

It is to be noted that the terms such as "first" and "second" in the description, the claims, and the preceding drawings of the present application are used for distinguishing between similar objects and are not necessarily used for describing a particular order or sequence. It is to be understood that data used in this manner are interchangeable where appropriate so that the examples of the present application described herein can be implemented in an order not illustrated or described herein. In addition, the terms "including" and any variations thereof are intended to encompass a non-exclusive inclusion. For example, a process, method, system, product, or device that includes a series of steps or units not only includes the expressly listed steps or units but may also include other steps or units that are not expressly listed or are inherent to such a process, method, product, or device.

In the present application, the terms "controller", "processor", "central processing unit", "CPU", and "MCU" are interchangeable. When a unit such as the "controller", the "processor", the "central processing unit", the "CPU", or the "MCU" is configured to implement specific functions, these functions may be implemented by a single preceding unit or multiple preceding units unless otherwise indicated.

In the present application, the term "device", "module", or "unit" is configured to implement a specific function in the form of hardware or software.

In the present application, the terms "computing", "judging", "controlling", "determining", "identifying", and the like refer to the operations and processes of a computer system or similar electronic computing device (for example, the controller or the processor).

A self-propelled device provided in the present application may be, for example, a self-propelled mower.

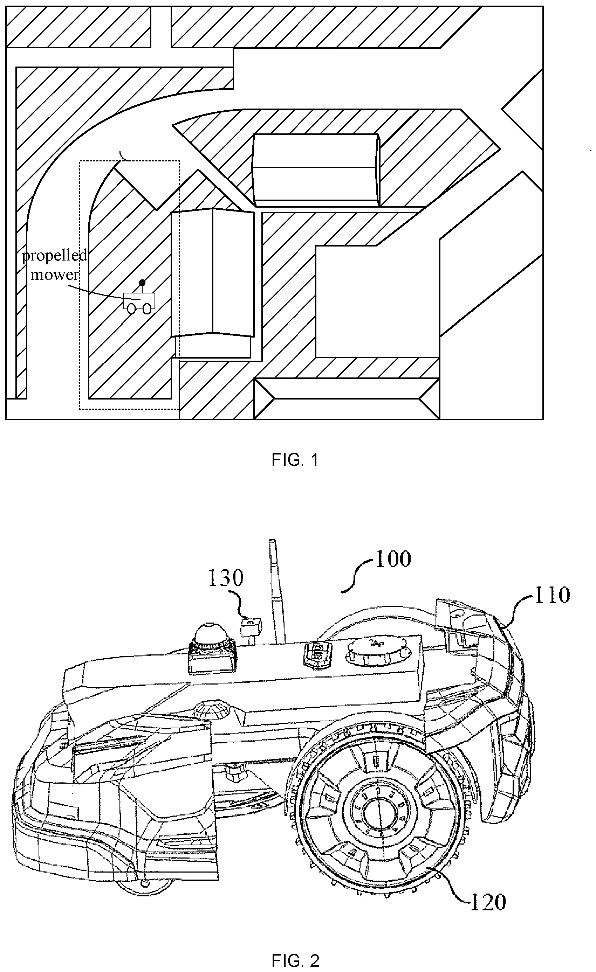

FIG. 1 is a schematic diagram of a working scenario of a self-propelled mower according to an example of the present application. As shown in FIG. 1, the self-propelled mower can move and operate within a work region. The work region is generally outdoors. The work region includes lawns. The outdoor working environment is complex and ever-changing, which is challenging for the self-propelled mower operating in it. For example, the lawn has various terrains and may have a slope. A slope that is too steep may cause the self-propelled mower to topple over. There are many types of grass on the lawn, and the growth of grass is generally affected by light, precipitation, seasons, temperature, and the like, making it challenging for the self-propelled mower to perform smart maintenance on the lawn. As the weather and seasons change, the lawn surface is prone to significant changes in surface undulations, which in turn causes the operating self-propelled mower to bump over the lawn surface. In addition, due to the ever-changing and complex outdoor working environment, including smoke, dust, weather, and lighting changes, the overall distribution of the acquired lawn images may have an offset. Smart identification may be performed according to the lawn images. However, the diversity and offset of the lawn images affect the identification accuracy to a certain extent.

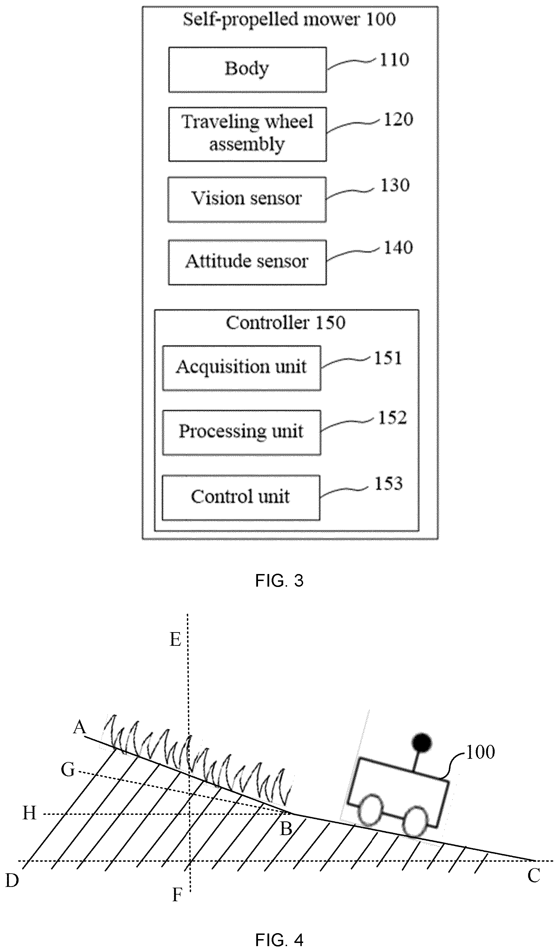

FIG. 2 is a structural view of a self-propelled mower 100 according to an example of the present application. Referring to FIG. 2, the example of the present application provides a self-propelled device. The self-propelled device includes a body 110; a traveling wheel assembly 120 configured to support the body 110; a vision sensor 130 configured to acquire an image in the traveling direction of the self-propelled device; in conjunction with FIGS. 2 and 3, an attitude sensor 140 configured to acquire the attitude of the self-propelled device; and a controller 150 electrically connected to the vision sensor 130 and the attitude sensor 140. The controller 150 is configured to calculate a first angle of inclination of the ground in the traveling direction of the self-propelled device according to the image in the traveling direction of the self-propelled device acquired by the vision sensor 130, calculate a second angle of inclination of the ground in conjunction with the first angle of inclination and the attitude of the self-propelled device, and control the traveling wheel assembly 120 according to the second angle of inclination.

In conjunction with FIGS. 2 and 3, the vision sensor 130 may be mounted on the vehicle body above the axle of the self-propelled device, and the vision sensor 130 may be flexibly mounted in various regions on the vehicle body. For example, the vision sensor 130 may be directly mounted on the housing of the body 110, and the installation orientation of the vision sensor 130 may include all angles. By flexibly setting the installation position and installation orientation of the vision sensor 130 on the self-propelled device, the image acquisition angle can be flexibly adjusted. Referring to FIGS. 2 and 3, the attitude sensor 140 and the controller 150 are disposed on the vehicle body of the self-propelled device separately, and the controller 150 is electrically connected to the vision sensor 130 and the attitude sensor 140 separately.

Referring to FIG. 3, the controller 150 may include an acquisition unit 151, a processing unit 152, and a control unit 153. Specifically, the vision sensor 130 collects the image in the traveling direction of the self-propelled device, the attitude sensor 140 acquires the attitude of the self-propelled device, the acquisition unit 151 in the controller 150 acquires the image from the vision sensor 130 and acquires the attitude of the self-propelled device from the attitude sensor 140, and the processing unit 152 processes the image in a preset manner to obtain the first angle of inclination of the ground in the traveling direction of the self-propelled device and obtain the second angle of inclination of the ground according to the attitude of the self-propelled device and the first angle of inclination. Using the second angle of inclination, the control unit 153 may control the traveling wheel assembly 120 to travel.

In the solution, in conjunction with the attitude of the self-propelled device, the second angle of inclination is obtained according to the first angle of inclination, thereby improving the slope angle identification accuracy. The case where the self-propelled device is the self-propelled mower 100 is used as an example. In the same slope scenario, even if the self-propelled mower operates on the slope in different attitudes, the second angle of inclination of the slope can be accurately obtained in conjunction with the attitudes and the first angle of inclination, thereby preventing the self-propelled mower 100 from toppling over.

In an implementable example, the first angle of inclination is a relative angle of inclination of the ground relative to the self-propelled device, and the second angle of inclination is an absolute angle of inclination of the ground relative to a horizontal plane.

FIG. 4 is a schematic diagram of a slope detection scenario of a self-propelled device according to an example of the present application. The case where the self-propelled device is the self-propelled mower 100 is used as an example. As shown in FIG. 4, the dashed line CD represents the horizon; the dashed line BH is parallel to the dashed line CD; the solid line BC represents the ground on which the self-propelled mower 100 is traveling; the solid line AB represents the ground in front of the self-propelled mower 100 in the traveling direction; the dashed line BG is the extension line of the solid line BC; the dashed line EF represents the gravity direction; where the dashed line CD and the dashed line EF are perpendicular to each other.

The self-propelled mower 100 may collect the image in front of the self-propelled mower 100 in the traveling direction and process the image into a point cloud. Then, a ground point cloud is extracted from the point cloud, and the ground point cloud corresponds to the solid line AB. The angle of inclination of the ground in front is extracted from the ground point cloud. The angle of inclination is the relative angle of inclination of the solid line AB relative to the self-propelled mower 100. The relative angle of inclination may be denoted by zABG. The pitch angle in the attitude of the self-propelled mower 100 is denoted by zBCD. Since the dashed line BH is parallel to the dashed line CD and the dashed line BG is the extension line of the solid line BC, ∠BCD = ∠GBH. The first absolute angle of inclination of the ground in front relative to a horizontal plane is obtained by adding the pitch angle to the relative angle of inclination, the horizontal plane is perpendicular to the gravity direction, and the first absolute angle of inclination may be denoted by zABH.

Similarly, the roll angle in the attitude of the self-propelled mower 100 may be used to determine the second absolute angle of inclination of the ground in front relative to the horizontal plane.

The first absolute angle of inclination and the second absolute angle of inclination are used as slope detection results. Further, the first absolute angle of inclination may be compared with a first angle threshold, and the second absolute angle of inclination may be compared with a second angle threshold. If the first absolute angle of inclination is less than the first angle threshold and the second absolute angle of inclination is less than the second angle threshold, it is determined that the ground in front is a safe region. If the first absolute angle of inclination is greater than or equal to the first angle threshold or the second absolute angle of inclination is greater than or equal to the second angle threshold, it is determined that the ground in front is a non-safe region. The first angle threshold and the second angle threshold may be preset according to actual conditions. The first angle threshold may not be equal to the second angle threshold. The first absolute angle of inclination and the second absolute angle of inclination are obtained according to the pitch angle and the roll angle in the attitude, respectively, and then whether the ground in front is a safe region is comprehensively determined according to the first absolute angle of inclination and the second absolute angle of inclination, thereby improving the accuracy of the determination and reducing the probability of the self-propelled device toppling over.

The first angle of inclination refers to the relative angle of inclination between the ground and the self-propelled device, while the second angle of inclination refers to the absolute angle of inclination of the ground and is not affected by the position of the self-propelled device. Specifically, in conjunction with the attitude of the self-propelled device, the second angle of inclination is obtained by removing the influence of the attitude from the first angle of inclination.

Specifically, relative to the horizontal plane, the angle of inclination of the ground where the self-propelled device is located may be determined according to the attitude of the self-propelled device. Then, according to the angle of inclination and the relative angle of inclination of the ground in the traveling direction of the self-propelled device relative to the self-propelled device, the absolute angle of inclination of the ground in the traveling direction of the self-propelled device relative to the horizontal plane may be obtained.

In actual application scenarios, what affects whether the self-propelled device topples over is the absolute angle of inclination of the ground where the self-propelled device is located relative to the horizontal plane. Therefore, the absolute angle of inclination is used as a slope angle identification result, thereby improving the slope angle identification accuracy.

In an implementable example, the vision sensor 130 may include at least one of the following: an active laser depth camera, a passive binocular stereo camera, and a passive binocular structured-light camera.

In an implementable example, the vision sensor 130 includes at least one of a ToF depth camera, an IR structured-light camera, and a binocular camera.

In an implementable example, the controller 150 establishes a depth image from the image, extracts a ground point cloud from the depth image, and acquires the first angle of inclination through the ground point cloud.

The processing unit 152 in the controller 150 can establish the depth image according to the image in the traveling direction of the self-propelled device. Specifically, the depth information of each pixel may be estimated by analyzing the geometric relationship between the pixel and the object in the image. The depth image represents the distance from each point in the scenario to the camera. The depth image is established from the image in multiple methods, including depth estimation based on a single image, stereo matching based on multiple images, and the like. The stereo matching method refers to calculating the parallax by matching corresponding pixels of the same object in different images, thereby estimating the depth information.

The processing unit 152 can extract the ground point cloud from the depth image. Specifically, the depth image may be processed into a point cloud, and then the ground point cloud may be extracted from the point cloud. The ground point cloud may be extracted from the point cloud using various algorithms. The various algorithms include detection based on point cloud three-dimensional features and detection based on image plane features. The detection algorithms are not limited to detection based on classic handcrafted features and detection based on learned features. Detection based on point cloud three-dimensional features refers to identifying and classifying target objects by extracting three-dimensional features in point cloud data, such as shapes, edges, and textures. Detection based on image plane features refers to identifying and classifying target objects by extracting plane features in the image, such as edges and corners. Detection based on classic handcrafted features refers to identifying and classifying target objects by extracting handcrafted features in the image, such as edges, corners, and textures. Detection based on learned features refers to identifying and classifying target objects by learning feature expressions in the image in conjunction with a classifier.

In an implementable example, the point cloud may be combined with a color image, that is, the point cloud may be colored to obtain a color point cloud. Then, the ground point cloud is extracted from the color point cloud, and the first angle of inclination is acquired through the ground point cloud. Specifically, the color point cloud includes the color information of the point cloud, so the color point cloud includes more semantic information than the point cloud, and thus the first angle of inclination obtained by using the color point cloud is more accurate to a certain extent.

The processing unit 152 can acquire the first angle of inclination through the ground point cloud. Specifically, the first angle of inclination is acquired through the ground point cloud in a geometric method. The geometric method includes at least one of the following methods: a line-surface fitting method and a voxel sampling method. The line-surface fitting method refers to restoring the lines and surfaces in the real three-dimensional scenario corresponding to the ground point cloud through geometric reasoning and calculation according to the lines and surfaces in the ground point cloud and then calculating the first angle of inclination from the fitted lines and surfaces. The voxel sampling method refers to dividing the ground point cloud data into a series of small cubes, called voxels, and then selecting a representative point in each voxel as a sampling point. Then, the angle of inclination of each sampling point relative to the self-propelled device is calculated using the coordinate information of the sampling point. The first angle of inclination is obtained by integrating the angle of inclination of each sampling point relative to the self-propelled device.

The first angle of inclination can be quickly and accurately acquired according to the image in the preceding manners.

In an implementable example, when the second angle of inclination is greater than or equal to a first threshold, the controller 150 determines that the ground in the traveling direction of the self-propelled device is a non-safe region and changes the traveling direction.

The first threshold is a threshold of an angle of inclination that is preset according to actual conditions.

Specifically, when it is determined that the second angle of inclination is greater than the first threshold, the control unit 153 in the controller 150 determines that the ground in the traveling direction of the self-propelled device is the non-safe region and changes the traveling direction of the self-propelled device, thereby preventing the self-propelled device from toppling over due to the inclination of the ground. The non-safe region refers to a ground region where the self-propelled device may easily topple over due to too large an angle of inclination.

In an implementable example, when the second angle of inclination is less than the first threshold, the controller 150 determines that the ground in the traveling direction of the self-propelled device is a safe region and maintains the traveling direction.

Specifically, when it is determined that the second angle of inclination is less than the first threshold, the control unit 153 in the controller 150 may determine that the ground in the traveling direction of the self-propelled device is the safe region and the self-propelled device continues traveling in the traveling direction. The safe region refers to a ground region where the self-propelled device is not likely to topple over since the angle of inclination is not too large.

In an implementable example, the traveling direction of the self-propelled device is the front of the self-propelled device.

The traveling direction of the self-propelled device may be determined according to the path planning.

In an implementable example, the first threshold is determined according to the friction of the ground.

The first threshold may be determined according to the friction of the ground, and the value of the first threshold may be proportional to the friction of the ground. The greater the friction of the ground is, the greater the value of the first threshold may be. The first threshold is determined according to the friction of the ground so that the value of the first threshold is more accurate.

In an implementable example, the attitude sensor 140 is an accelerometer.

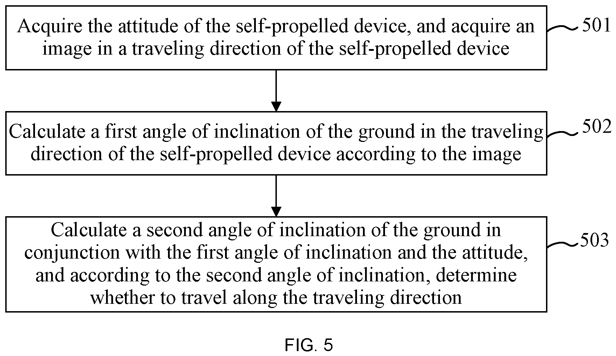

FIG. 5 is a flowchart of a control method for a self-propelled device according to an example of the present application. This example is applicable to a driving route planning scenario in which the self-propelled device travels on the ground with a certain angle of inclination. The self-propelled device may be, for example, the self-propelled mower 100. The method may be performed by the self-propelled device. As shown in FIG. 5, the method includes the steps below.

In step 501, the attitude of the self-propelled device is acquired, and an image in a traveling direction of the self-propelled device is acquired.

In step 502, a first angle of inclination of the ground in the traveling direction of the self-propelled device is calculated according to the image.

In step 503, a second angle of inclination of the ground is calculated in conjunction with the first angle of inclination and the attitude, and according to the second angle of inclination, whether to travel along the traveling direction is determined.

In this solution, in conjunction with the attitude of the self-propelled device, the second angle of inclination is obtained by removing the influence of the attitude from the first angle of inclination. The second angle of inclination is used as a slope detection result of the ground in the traveling direction of the self-propelled device. Moreover, whether to travel along the traveling direction is determined according to the second angle of inclination, thereby controlling the self-propelled device to travel and preventing the self-propelled device from toppling over due to too large an angle of inclination of the slope. In this manner, the slope detection accuracy of the ground in the traveling direction of the self-propelled device can be improved, thereby reducing the probability of the self-propelled device toppling over.

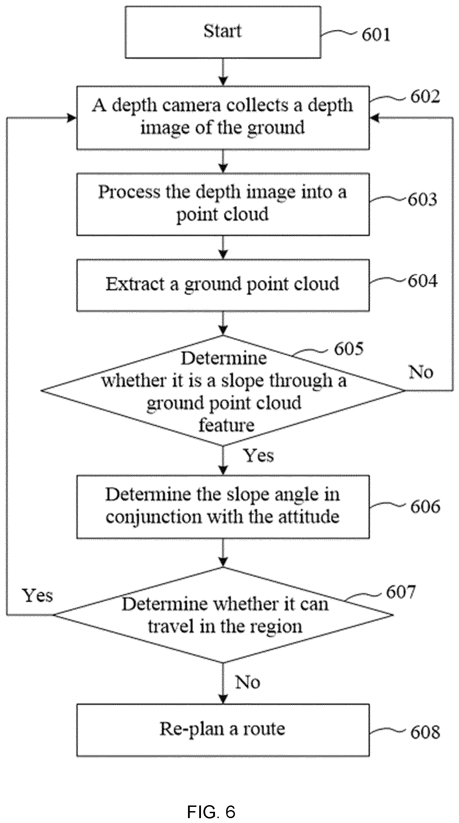

The example of the present application further specifically provides a point cloud-based slope detection algorithm for a mower equipped with a depth camera. FIG. 6 is a flowchart of a point cloud-based slope detection algorithm according to an example of the present application. Referring to FIG. 6, the specific process of the algorithm is described below.

In step 601, the mower is powered on and a slope detection program in the controller of the mower is started.

In step 602, an image in front of the mower is collected using a depth camera. The depth camera is not limited to an active laser depth camera, a passive binocular stereo camera, or a passive binocular structured-light camera.

In step 603, a depth image collected by the mower is processed into a point cloud using an algorithm in the slope detection program.

In step 604, a ground point cloud is extracted from a point cloud in front of the mower through algorithm processing. The algorithms include detection based on point cloud three-dimensional features and detection based on image plane features. The detection algorithms are not limited to detection based on classic handcrafted features and detection based on learned features.

In step 605, the relative angle of inclination of the ground on the driving route is extracted through the ground point cloud information in a geometric method. The extraction method is not limited to the line-surface fitting method and the voxel sampling method.

In step 606, in conjunction with the attitude information provided by the inertial navigation system and the ground inclination information, the absolute angle of inclination of the ground relative to the horizontal plane is comprehensively determined.

In step 607, the angle of inclination of the ground relative to the horizontal plane is uploaded to a planning decision layer to determine whether the region is safe for driving.

In step 608, a route is planned according to a determination result in step 607. Specifically, if the region is determined to be drivable, the mower is controlled to continue traveling along the traveling direction; and if the region is determined to be non-drivable, the traveling direction is changed and a safe driving route is planned.

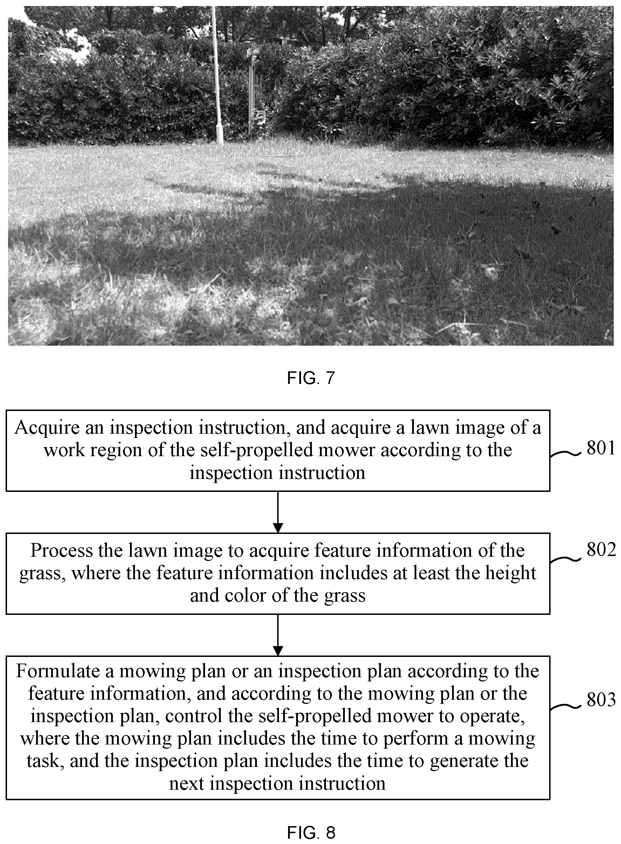

FIG. 7 is a schematic view of a lawn image according to an example of the present application. The growth state of grass is affected by light, precipitation, seasons, temperature, and the like and is not constant. The lawn image shown in FIG. 7 includes feature information of the grass, such as the height, color, or type of the grass, which represents the growth state of the grass. Smart maintenance is performed on the lawn according to different growth states of the grass and is a challenge for the self-propelled mower.

In an example, in conjunction with FIGS. 2 and 3, the controller 150 is electrically connected to the vision sensor 130, and the controller 150 is configured to, according to an inspection instruction, acquire and receive a lawn image of a work region acquired by the vision sensor 130 and process the lawn image to acquire the feature information of the grass, where the feature information includes at least the height and color of the grass; and formulate a mowing plan or an inspection plan according to the feature information, and according to the mowing plan or the inspection plan, control the self-propelled mower 100 to operate, where the mowing plan includes the time to perform a mowing task, and the inspection plan includes the time to generate the next inspection instruction. Referring to FIG. 3, the controller 150 may include an acquisition unit 151, a processing unit 152, and a control unit 153. Specifically, the lawn image of the work region where the self-propelled mower 100 is located is collected using the vision sensor 130. Referring to FIG. 3, the acquisition unit 151 may acquire the inspection instruction and acquire the lawn image from the vision sensor 130 according to the inspection instruction, where the inspection instruction may be generated in response to the operation of the user or may be generated according to the inspection plan. The processing unit 152 may process the lawn image in a preset manner to acquire the feature information of the grass, where the feature information includes at least the height and color of the grass. Specifically, the lawn image may be preprocessed first, including steps such as denoising, image enhancement, and color correction, to improve the image quality. Then, the grass plants in the preprocessed lawn image are separated from the background using the deep learning semantic segmentation algorithm. According to a segmentation result, the parameters of the segmented grass plants may be calculated, where the parameters include at least the heights and colors of the grass plants. Finally, the calculated parameters of the grass plants are statistically analyzed to acquire the overall features of the lawn. For example, statistical data such as the average height and average color of the grass plants may be calculated. The average height of the grass plants may be used as the grass height, and the average color of the grass plants may be used as the grass color. The processing unit 152 may formulate the mowing plan or the inspection plan according to the feature information of the grass. For example, if it is determined according to the feature information of the grass that the lawn needs to be mowed in the near future, the mowing plan is generated. If it is determined according to the feature information of the grass that the lawn does not need to be mowed in the near future, the inspection plan may be generated, thereby monitoring the growth of the grass and mowing the grass when the grass needs to be mowed. According to the mowing plan or the inspection plan, the control unit 153 may control the self-propelled mower 100 to operate. The mowing plan may include a mowing task and the time to perform the mowing task. The inspection plan may include the time when the self-propelled mower 100 generates the next inspection instruction.

The colors of different types of grass are usually different, the colors of the same type of grass in different seasons are usually different, the suitable mowing heights for different types of grass are usually different, and the suitable mowing heights for the same type of grass in different seasons are usually different. Therefore, in this solution, the growth state of the grass is identified according to at least the height and color of the grass and other feature information. For example, the type of the grass and the season may be determined based on the color, and the mowing plan or the inspection plan for the self-propelled mower 100 may be formulated based on the type and height of the grass and the season so that lawn maintenance is smarter, thereby improving the quality of lawn maintenance.

In an implementable example, the mowing height threshold is determined according to the color.

Specifically, a color-height mapping table may be preset according to experience, where the table includes a mapping relationship between the color and height. The processing unit 152 may query the color-height mapping table using the color of the grass to obtain the height corresponding to the color of the grass and determine the height as the mowing height threshold.

If the height is greater than the mowing height threshold, the self-propelled mower is controlled to perform the mowing task.

The processing unit 152 may compare the height of the grass with the mowing height threshold and if it is determined that the height of the grass is greater than the mowing height threshold, generate the mowing task to be performed. According to the mowing task to be performed, the control unit 153 controls the self-propelled mower 100 to operate.

If the height is less than or equal to the mowing height threshold, the mowing plan or the inspection plan is formulated according to the difference between the mowing height threshold and the height.

If determining that the height of the grass is less than or equal to the mowing height threshold, the processing unit 152 calculates the difference between the mowing height threshold and the height of the grass and formulates the mowing plan or the inspection plan according to the difference. According to the mowing plan or the inspection plan, the control unit 153 controls the self-propelled mower 100 to operate. For example, if the difference is relatively small, it may be determined that the grass needs to be mowed in the near future, and the mowing plan may be formulated in this case. If the difference is relatively large, it may be determined that the grass does not need to be mowed in the near future, and the inspection plan may be formulated in this case, thereby monitoring the growth of the grass and mowing the grass when the grass needs to be mowed.

The colors of different types of grass are usually different, the colors of the same type of grass in different seasons are usually different, the suitable mowing heights for different types of grass are usually different, and the suitable mowing heights for the same type of grass in different seasons are usually different. Therefore, in this solution, the growth state of the grass is identified according to the color of the grass. For example, the type of the grass and the season may be determined based on the color, and the mowing height threshold may be determined based on the type of the grass and the season so that the mowing plan or the inspection plan is formulated according to the mowing height threshold and the height of the grass, thereby improving the quality of lawn maintenance.

In an implementable example, the feature information further includes the dimension, shape, and/or density. The acquisition unit 151 acquires season information, and the processing unit 152 determines the type of the grass according to the season information, dimension, shape, and color.

In the present application, a feature information mapping table may be preset according to experience, and the table includes mapping relationships among seasons, dimensions, shapes, colors, and grass types. The acquisition unit 151 may acquire the season information. Specifically, the acquisition unit 151 may calculate the season information according to time information. Alternatively, the season information may be determined according to at least the color of the grass. The processing unit 152 may process the lawn image to acquire the dimension, shape, and density of the grass. Specifically, the grass plants in the lawn image may be separated from the background, and then the parameters of the segmented grass plants may be calculated, where the parameters include the dimensions, shapes, and densities of the grass plants. The dimensions include at least height and width, the shape includes at least roundness and complexity, and the density includes at least the number of grass plants per unit area. Finally, the calculated parameters of the grass plants are statistically analyzed to acquire the overall features of the lawn. For example, statistical data such as the average height, average width, average roundness, average complexity, and average density of the grass plants may be calculated. The information such as the average height and average width of the grass plants may be used as the grass dimensions, the information such as the average roundness and average complexity of the grass plants may be used as the grass shape, and the information such as the average density may be used as the grass density. Then, using the season information and the dimension, shape, and color of the grass, the feature information mapping table is queried, thereby obtaining the type of the grass.

The processing unit 152 determines the mowing height threshold according to the type, density, and season information of the grass.

Specifically, a feature mapping table may be preset according to experience, where the table includes mapping relationships among types, densities, seasons, and heights. The processing unit 152 may query the feature mapping table according to the season information and the type and density of the grass to obtain the height corresponding to the season information and the type and density of the grass and determine the height as the mowing height threshold.

Different types of grass usually have different features such as dimensions, shapes, and colors in different seasons, the suitable mowing heights for different types of grass are usually different, the suitable mowing heights for the same type of grass in different seasons are usually different, and the suitable mowing heights for grass of different densities are usually different. Therefore, in this solution, the type of the grass can be accurately determined according to the season information and the dimension, shape, and color of the grass, and then the mowing height threshold can be more accurately determined according to the type and density of the grass and the season information. According to the mowing plan or the inspection plan formulated based on the mowing height threshold, the self-propelled mower 100 is controlled to operate, thereby improving the quality of lawn maintenance.

In an implementable example, if determining that the difference between the mowing height threshold and the height of the grass is less than or equal to a preset threshold, the processing unit 152 formulates the mowing plan according to the difference; and if determining that the difference is greater than the preset threshold, the processing unit 152 formulates the inspection plan according to the difference.

The preset threshold is a value preset according to actual conditions. If the difference between the mowing height threshold and the height of the grass is less than or equal to the preset threshold, it indicates that the difference between the height of the grass and the mowing height threshold is not large. In this case, the grass growth rate can generally be estimated more accurately, and then a more accurate mowing plan can be formulated according to the estimated grass growth rate.

If the difference between the mowing height threshold and the height of the grass is greater than the preset threshold, it indicates that the difference between the height of the grass and the mowing height threshold is relatively large. In this case, it is generally relatively difficult to accurately estimate the grass growth rate, and thus it is difficult to accurately formulate the mowing plan. Therefore, in this case, the inspection plan may be formulated according to the difference, thereby monitoring the growth of the grass. For example, when the difference is greater than the preset threshold and if the difference is relatively large, a relatively long time interval may be set for inspecting the lawn to determine whether mowing is needed; and when the difference is greater than the preset threshold and if the difference is relatively small, a relatively short time interval may be set for inspecting the lawn to determine whether mowing is needed. In this manner, not only can the quality of lawn maintenance be improved, but also resources are saved.

In this solution, the difference between the mowing height threshold and the height of the grass may be determined, and then the mowing plan or the inspection plan may be formulated based on the difference and the comparison result between the difference and the preset threshold, thereby more accurately controlling the self-propelled mower 100 to operate and achieving a better lawn maintenance effect.

In an implementable example, the height of the grass is determined according to the point cloud data of the grass, where the point cloud data is determined according to the lawn image.

The processing unit 152 may establish the depth image from the lawn image, process the depth image into the point cloud, which is the point cloud data of the grass, and then use the point cloud data of the grass to identify the height of the grass. In this manner, the height of the grass can be acquired quickly and accurately. Specifically, each point on the depth image may be converted into the world coordinate system through the relationship of similar triangles or coordinate system transformation, thereby obtaining the point cloud data of the grass. First, the vision sensor 130 needs to be aimed at the lawn surface and the three-dimensional point cloud data of the lawn needs to be acquired. The vision sensor 130 may capture the three-dimensional coordinates of each point on the lawn surface, including X, Y, and Z coordinates. The acquired point cloud data needs to be processed to remove noise, smooth data, and perform data alignment. These processes may include filtering, smoothing, resampling, and other operations to improve the quality and accuracy of the data. Features may be extracted from the point cloud data and include the shape and height of the grass, and then a classifier may be designed according to the extracted features to distinguish the grass from other objects. After the classifier identifies the grass, the point cloud data of a certain region may be selected from the processed point cloud data, and the height of the grass in the region is obtained by calculating the average height of these points. Specifically, some representative point cloud data may be selected and the average height is calculated to obtain the height of the grass in the region. It is to be noted that the accuracy and stability of the vision sensor 130 may be affected by factors such as ambient lighting and camera settings, so careful calibration is required in advance. Of course, the point cloud data may be acquired through the lidar, so in this solution, the vision sensor 130 may be replaced with the lidar.

FIG. 8 is a flowchart of a control method for a self-propelled mower according to an example of the present application. This example is applicable to a scenario in which the self-propelled mower 100 performs smart maintenance on the lawn and is particularly applicable to a case where the self-propelled mower 100 is out of user control for a long period of time. The method may be performed by the self-propelled mower 100. As shown in FIG. 8, the method includes the steps below.

In step 801, an inspection instruction is acquired, and a lawn image of a work region of the self-propelled mower is acquired according to the inspection instruction.

In step 802, the lawn image is processed to acquire feature information of the grass, where the feature information includes at least the height and color of the grass.

In step 803, a mowing plan or an inspection plan is formulated according to the feature information, and according to the mowing plan or the inspection plan, the self-propelled mower is controlled to operate, where the mowing plan includes the time to perform a mowing task, and the inspection plan includes the time to generate the next inspection instruction.

The colors of different types of grass are usually different, the colors of the same type of grass in different seasons are usually different, the suitable mowing heights for different types of grass are usually different, and the suitable mowing heights for the same type of grass in different seasons are usually different. Therefore, in this solution, the mowing plan or the inspection plan can be formulated more accurately according to at least the height and color of the grass, thereby achieving smarter lawn maintenance and a better lawn maintenance effect.

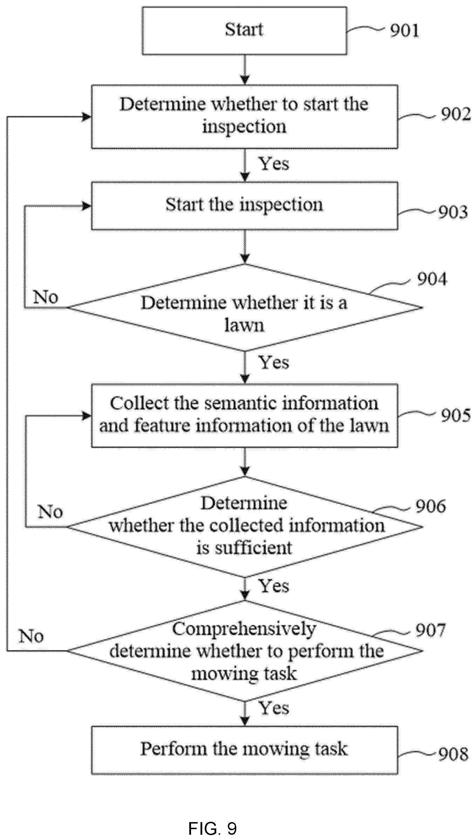

The example of the present application further specifically provides a smart mowing decision-making algorithm based on semantic recognition for the mower. FIG. 9 is a flowchart of a smart mowing decision-making algorithm according to an example of the present application. Referring to FIG. 9, the specific process of the algorithm is described below.

In step 901, the mower is powered on.

In step 902, an inspection mode in the controller of the mower starts to be executed to determine whether to start the inspection.

In step 903, the mower inspects the lawn along a certain route. The route may be a user-specified route, a route that the mower plans autonomously according to lawn conditions, or a completely random route.

In step 904, an image is acquired by a vision sensor, semantic information in the image is extracted using a certain algorithm, and whether the mower travels in the lawn region is determined through the semantic information. The algorithm may be a deep learning algorithm. If the semantic information represents that there is grass in the image, it is determined that the mower travels in the lawn region; and if the semantic information represents that there is no grass in the image, it is determined that the mower does not travel in the lawn region. Alternatively, the image may be processed into a color point cloud, and the semantic information may be recognized through the color point cloud. Alternatively, a semantic information recognition result of the image and a semantic information recognition result of the color point cloud may be combined to obtain combined semantic information.

In step 905, if the mower is not in the lawn region, the mower continues traveling, and step 903 is performed; and if the mower is in the lawn region, the lawn-related semantic information and feature information extracted by the algorithm are collected, where the semantic information includes recognition labels such as whether it is grass, the type of the grass, the density, and the season. The semantic information may include pixel-level or sub-pixel-level semantic labels for the lawn within the field of view. The feature information of the grass includes the color, height, dimension, shape, and the like of the grass. The season is determined through time.

In step 906, whether the collected feature information is sufficient is determined according to a preset statistical algorithm. If the collected feature information is not sufficient, the collection of the feature information continues. If the collected feature information is sufficient, the collection of the feature information stops, and the information required for decision-making is further extracted according to the set of feature information currently collected. The decision-making information is not limited to the average value and variance of the feature information of the grass distributed in the entire lawn region, the average value and variance of the feature information of the grass subdivided into different regions, and the semantic information of the grass. The step of determining whether the collected feature information is sufficient according to the preset statistical algorithm includes: if it is determined that the region of the statistically analyzed lawn is large enough, determining that the collected feature information is sufficient.

In step 907, whether to perform the mowing task is comprehensively determined according to the decision-making information. The mowing task is not limited to mowing the entire region, mowing part of the region, and multiple mowing tasks in different periods. For example, the work region of the mower may include various scenarios, for example, the grass in the work region grows unevenly, the mowing in the previous time is uneven, or various types of grass exist in the work region and have different mowing height requirements. For different scenarios, mowing tasks may be set adaptively.

In step 908, the mowing task planned in step 907 is performed. If the mowing task cannot be performed due to other reasons, such as human intervention, weather reasons, and battery power, the current condition of the lawn is recorded for the next comprehensive decision-making plan.

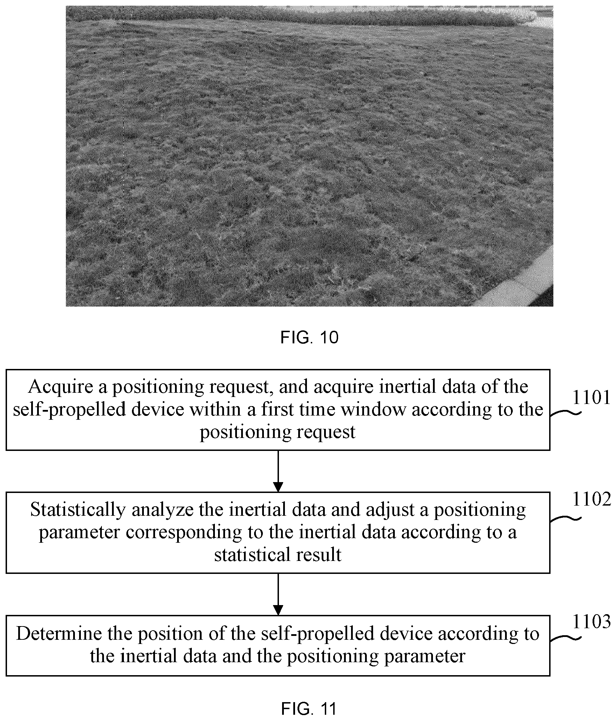

FIG. 10 is a schematic view of a positioning scenario in which a self-propelled device travels on the lawn according to an example of the present application. As shown in FIG. 10, the lawn is generally outdoors, and due to changes in outdoor weather and seasons, the surface conditions of the lawn may change significantly. Different undulations of the lawn surface affect the collection of inertial data by the IMU on the self-propelled device, easily causing inaccurate positioning of the self-propelled device, which is a challenge for the self-propelled device.

In an example, in conjunction with FIGS. 2 and 3, the case where the IMU is the attitude sensor 140 is used as an example. The IMU is disposed in the body 110 and includes at least one of an accelerometer and a gyroscope. The controller 150 is electrically connected to the IMU and is configured to control the self-propelled device to travel; receive inertial data from the IMU; and statistically analyze the inertial data received within a first time window and adjust a positioning parameter of the IMU according to a statistical result.

In conjunction with FIGS. 2 and 3, the attitude sensor 140 and the controller 150 are disposed on the vehicle body of the self-propelled device separately, and the controller 150 is electrically connected to the attitude sensor 140.

Referring to FIG. 3, the controller 150 may include the acquisition unit 151 and the processing unit 152. Specifically, the controller 150 controls the self-propelled device to travel, and the IMU collects the inertial data of the self-propelled device. The acquisition unit 151 in the controller 150 may acquire the inertial data from the IMU. In a preset manner, the processing unit 152 may statistically analyze the inertial data received within the first time window to obtain the statistical result. The duration of the first time window is preset according to actual conditions; the positioning parameter of the IMU is adjusted according to the statistical result; and then the position of the self-propelled device is determined according to the inertial data and the positioning parameter.

The self-propelled device is positioned using the inertial data. The bumpy surface conditions in the driving region of the self-propelled device affect the accuracy of the inertial data collected by the IMU and thus affect the positioning accuracy of the self-propelled device. The statistical result of the inertial data may reflect the bumpy surface conditions. Therefore, in this solution, the positioning parameter of the inertial data is adjusted according to the statistical result of the inertial data of the self-propelled device so that the impact of surface bumps on positioning can be minimized; and the self-propelled device is positioned through the inertial data and the adjusted positioning parameter, thereby improving the positioning accuracy.

In an implementable example, the statistical result reflects the flatness of a road section passed by the self-propelled device within the first time window.

The higher the flatness of the road section is, the flatter the road section is, and the less bumpy the road section is.

In an implementable example, the inertial data collected by the IMU includes at least the acceleration and angular speed of the self-propelled device, and the step of, in the preset manner, statistically analyzing the inertial data received within the first time window to obtain the statistical result includes: integrating the acceleration and angular speed in the inertial data received within the first time window to obtain the speed and angle, respectively; smoothing the acceleration, angular speed, speed, and angle to obtain an acceleration processing result, an angular speed processing result, a speed processing result, and an angle processing result, respectively; determining the first variance between the acceleration and the acceleration processing result, determining the second variance between the angular speed and the angular speed processing result, determining the third variance between the speed and the speed processing result, and determining the fourth variance between the angle and the angle processing result; and determining the first variance, the second variance, the third variance, and the fourth variance as the statistical result.

The step of smoothing the acceleration to obtain the acceleration processing result includes: processing the acceleration in a sliding window smoothing method to obtain the acceleration processing result. For example, an average value of the acceleration collected within the first time window is calculated, and the average value is used as the acceleration processing result.

Similarly, the angular speed is smoothed to obtain the angular speed processing result; the speed is smoothed to obtain the speed processing result; and the angle is smoothed to obtain the angle processing result.

The step of determining the first variance between the acceleration and the acceleration processing result includes: determining the square of the difference between the acceleration and the acceleration processing result and using the weighted sum of squares as the first variance. Different weight values may be adopted for the acceleration in different sections, and the weight values corresponding to different sections may be set through manual parameter adjustment, in a machine learning method, or in other methods.

Similarly, the second variance between the angular speed and the angular speed processing result can be determined; the third variance between the speed and the speed processing result can be determined; and the fourth variance between the angle and the angle processing result can be determined.

The approximate mean in the dynamic motion can be obtained through smoothing, thereby statistically analyzing the bumps in the motion process. The variance can better show the distribution difference of data around the mean. The smaller the distribution difference is, the smaller the variance is. The larger the distribution difference is, the larger the variance is.

In an implementable example, whether the positioning parameter of the IMU needs to be adjusted may be determined according to the statistical result. If it is determined that the positioning parameter of the IMU needs to be adjusted, the positioning parameter is adjusted. If it is determined that the positioning parameter of the IMU does not need to be adjusted, the positioning parameter is not adjusted.

In this solution, whether the positioning parameter needs to be adjusted may be determined through the statistical result, and the positioning parameter is adjusted only in the case where the condition is satisfied, thereby improving the positioning accuracy to a certain extent.

Specifically, a preset range may be set according to experience, and the statistical result is compared with the preset range. If it is determined that the statistical result is within the preset range, it is determined that the positioning parameter needs to be adjusted. Whether the positioning parameter needs to be adjusted can be determined quickly and accurately in this manner.

Alternatively, a binary classification model may be trained using the statistical result for training, and a classification result of the binary classification model is used for representing whether the positioning parameter of the IMU needs to be adjusted. Then, the trained binary classification model may be used to process the statistical result to obtain the classification result. If the classification result represents that the positioning parameter needs to be adjusted, the positioning parameter is adjusted. If the classification result represents that the positioning parameter does not need to be adjusted, the positioning parameter is not adjusted. Whether the positioning parameter needs to be adjusted can be determined quickly and accurately in this manner.

Specifically, a mapping table may be preset according to experience, where the table includes a mapping relationship between the flatness and the adjustment parameter. The mapping table is queried using the statistical result to obtain the adjustment parameter corresponding to the statistical result, and the positioning parameter of the IMU is updated using the adjustment parameter. The positioning parameter can be adjusted quickly and accurately in this manner.

Alternatively, the statistical result is processed using a preset regression model to obtain a regression result. Then, the positioning parameter is updated using the regression result. The positioning parameter can be adjusted quickly and accurately in this manner.

In an implementable example, the first time window is determined according to the traveling speed of the self-propelled device.

Specifically, the larger the traveling speed of the self-propelled device is, the shorter the duration of the first time window is.

In an implementable example, the value range of the first time window is greater than or equal to a first duration threshold and less than a second duration threshold, where the first duration threshold is less than the second duration threshold.

The first duration threshold and the second duration threshold are both preset according to experience. The value of the first time window may be any value between the first duration threshold and the second duration threshold.

Only the statistical result obtained by statistically analyzing enough inertial data can represent the flatness of the road section more accurately. The manner of setting the first time window in this solution is a relatively convenient and accurate manner of determining whether the acquired inertial data is sufficient.

In an implementable example, the positioning parameter is the noise of the inertial data.

Specifically, the bumpy surface conditions in the driving region of the self-propelled device affect the accuracy of the inertial data collected by the IMU. The positioning parameter may be used as the noise of the inertial data and used for representing the accuracy of the inertial data. The statistical result of the inertial data may reflect the bumpy surface conditions. Therefore, in this solution, the positioning parameter of the inertial data is adjusted according to the statistical result of the inertial data, thereby minimizing the impact of surface bumps on positioning and improving the positioning accuracy.

In an implementable example, the positioning parameter is the weight of the inertial data when the inertial data is fused with data of other modalities for positioning.

In the present application, the lidar and camera may be disposed on the self-propelled device. Multimodal fusion positioning is performed on the self-propelled device by using the inertial data and data of other modalities. Specifically, different types of data, such as the inertial data, point cloud data, and image data, may be acquired through sensors such as the IMU, lidar, and camera, and the data is processed through a multimodal fusion algorithm, thereby achieving more accurate positioning of the self-propelled device. The multimodal fusion algorithm includes the weighted summation of multimodal data, and the positioning parameter may be the weight of the inertial data when the inertial data is fused with data of other modalities for positioning. The bumpier the surface of the driving region of the self-propelled device is, the less accurate the inertial data obtained by the IMU is. Therefore, when the surface is relatively bumpy, the fusion positioning accuracy can be improved to a certain extent by reducing the weight of the inertial data during fusion positioning. The statistical result of the inertial data may reflect the bumpy surface conditions. Therefore, in this solution, the positioning parameter of the inertial data is adjusted according to the statistical result of the inertial data of the self-propelled device, and the positioning of the self-propelled device calculated using the adjusted positioning parameter is more accurate.

In an implementable example, the vibration of the IMU may be damped to reduce the impact of the uneven road section on which the self-propelled device travels on the IMU. Specifically, the vibration damping measure of the IMU may be implemented from two aspects: the design and structure. In terms of the design, to reduce the impact of the vibration and shock on the IMU, the adaptability of the IMU can be improved through the material selection and reasonable structural design. For example, high-precision next-generation IMUs, such as MPU6050 and BMI055 may be adopted. These chips have relatively high adaptability and stability so that the impact of body vibration on the measurement accuracy of the IMU can be reduced. In terms of the structure, a series of vibration damping designs may be adopted. For example, vibration damping materials such as silicone, rubber, and silicone rubber and vibration damping structures are used to isolate vibrations. Specifically, the structure of the circuit board of the IMU may be reasonably set such that the center of gravity of the chip and the center of gravity of the IMU are at the same point, thereby achieving the best vibration damping effect. In addition, vibration damping devices such as a shock absorber and an air damper may be used and can effectively reduce the impact of body vibration on the IMU.

FIG. 11 is a flowchart of a positioning method for a self-propelled device according to an example of the present application. This example is applicable to a positioning scenario of the self-propelled device during driving and is particularly applicable to a positioning scenario in which the self-propelled device travels on a relatively bumpy road section. The method may be performed by the self-propelled device. As shown in FIG. 11, the method includes the steps below.

In step 1101, a positioning request is acquired, and inertial data of the self-propelled device within a first time window is acquired according to the positioning request.

In step 1102, the inertial data is statistically analyzed and a positioning parameter corresponding to the inertial data is adjusted according to a statistical result.

In step 1103, the position of the self-propelled device is determined according to the inertial data and the positioning parameter.

The bumpy surface conditions in the driving region of the self-propelled device affect the accuracy of the inertial data collected by the IMU and thus affect the positioning accuracy of the self-propelled device. The statistical result of the inertial data may reflect the bumpy surface conditions. Therefore, in this solution, the positioning parameter of the inertial data is adjusted according to the statistical result of the inertial data of the self-propelled device so that the impact of surface bumps on positioning can be minimized; and the self-propelled device is positioned through the inertial data and the adjusted positioning parameter, thereby improving the positioning accuracy.

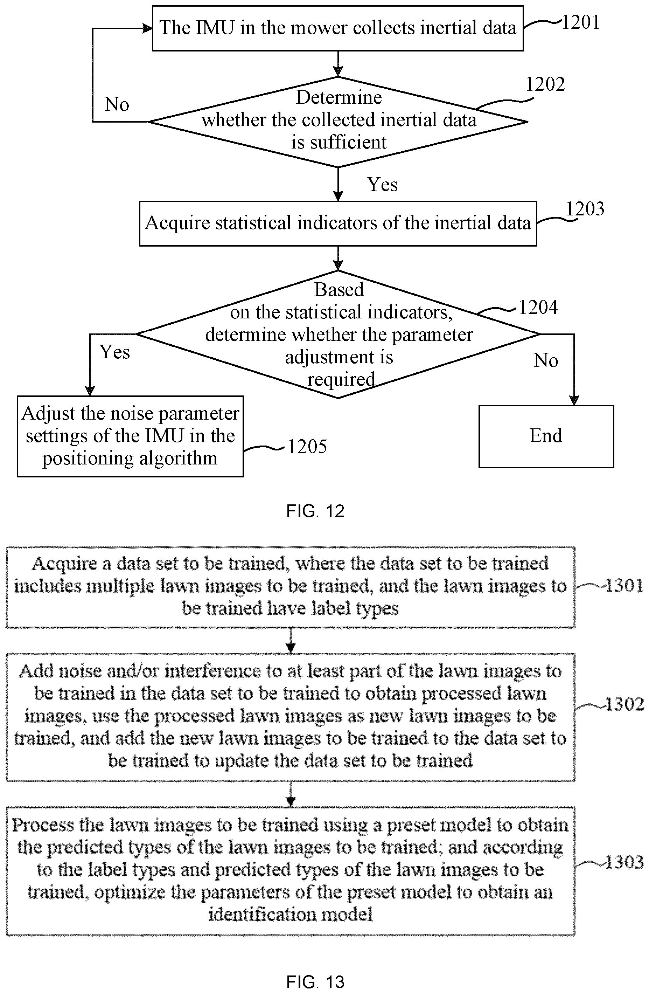

The example of the present application further specifically provides a positioning parameter adjustment algorithm based on IMU data statistics for the mower. FIG. 12 is a flowchart of a positioning parameter adjustment algorithm based on IMU data statistics according to an example of the present application. Referring to FIG. 12, the specific process of the algorithm is described below.

In step 1201, the IMU in the mower collects inertial data, where the inertial data includes, but is not limited to, the acceleration, the angular speed, and the like.

In step 1202, whether the collected inertial data is sufficient is determined, where the basis for the determination includes, but is not limited to, the data collection time, the distance by which the mower travels, whether the mower mows grass, and other state information. The vibration generated by the mower during mowing also impacts the IMU, and this impact is easily confused with the impact of road bumps on the IMU. Therefore, inertial data when the mower is not mowing the grass needs to be collected. If the inertial data is insufficient, the adjustment of the positioning parameter using the inertial data is not accurate, so sufficient inertial data needs to be collected. If the collection duration of the inertial data reaches a preset duration threshold or the distance by which the mower travels during the inertial data collection process reaches a preset distance threshold, it can be determined that sufficient inertial data is collected. When the inertial data is sufficient, step 1203 is performed. When the inertial data is insufficient, the collection of inertial data continues.

In step 1203, the collected inertial data is processed using an algorithm to obtain statistical indicators of the inertial data. The algorithm includes, but is not limited to, a machine learning method or a statistical learning method. Specifically, the inertial data includes at least the acceleration and angular speed. The inertial data is integrated to obtain speed data and angle data. The inertial data, speed data, and angle data are smoothed in the sliding window smoothing method, and the smoothed data is statistically analyzed to obtain the variance of the inertial data, the variance of the speed data, and the variance of the angle data. Different weights are adopted for data in different numerical ranges, and the weight values may be set through manual parameter adjustment, in the machine learning method, or in other methods.

In step 1204, based on a series of statistical indicators obtained in step 1203, whether the parameter adjustment is required is determined in a qualitative method. The qualitative method includes, but is not limited to, an empirical determination method or a machine learning binary classification method.

In step 1205, for a scenario in which the parameter adjustment is required in step 1204, the positioning parameter of the IMU is adjusted according to a series of obtained statistical indicators in a table lookup interpolation method or other machine learning regression methods.

FIG. 13 is a flowchart of a model training method for lawn image processing according to an example of the present application. This example is applicable to a training scenario of a model for identifying grass or non-grass objects in the lawn image. The method may be performed by an electronic device. As shown in FIG. 13, the method includes the steps below.

In step 1301, a data set to be trained is acquired, where the data set to be trained includes multiple lawn images to be trained, and the lawn images to be trained have label types.

Specifically, the vision sensor may be used to acquire the lawn images to be trained, and the lawn images to be trained may be cropped, sampled, and labeled. The lawn image to be trained may include information such as the ground, objects, and sky within the field of view of the vision sensor.

Alternatively, the lawn images to be trained that have label types and are publicly available on the Internet may be acquired. The label types may include the types of objects within the field of view of the vision sensor, such as grass, pedestrians, trees, houses, sky, and the ground.

In step 1302, noise and/or interference are added to at least part of the lawn images to be trained in the data set to be trained to obtain processed lawn images, and the processed lawn images are used as new lawn images to be trained and added to the data set to be trained to update the data set to be trained.

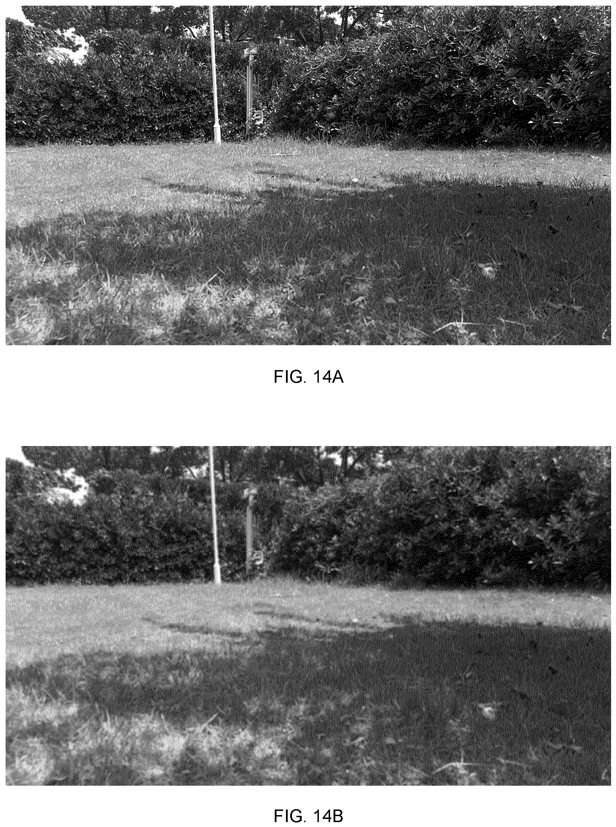

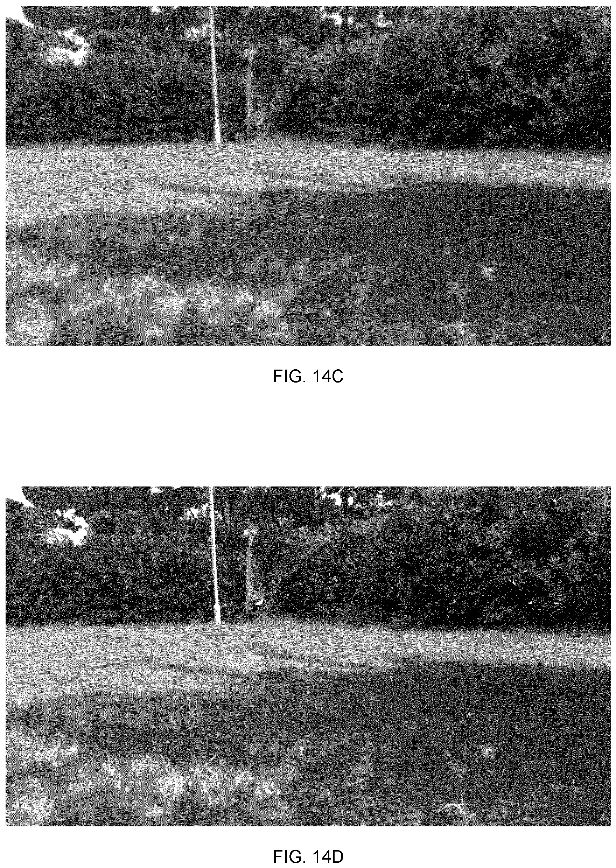

In various manners, noise and/or interference are added to the lawn images to be trained to obtain the processed lawn images, thereby enriching the training samples and simulating as many possible situations in the actual scenario as possible. Specifically, referring to FIG. 14, the lawn image to be trained is blurred, where the processing includes a Gaussian blur, a mean blur, and a median blur. The Gaussian blur refers to blurring an image by convolving the image with a normal distribution. The mean blur is mainly that each pixel in the image is operated, and the value of each pixel is replaced with the average value of neighboring pixels. The median blur is mainly that each pixel in the image is operated, and the value of each pixel is replaced with the median of neighboring pixels.

In step 1303, the lawn images to be trained are processed using a preset model to obtain the predicted types of the lawn images to be trained; and according to the label types and predicted types of the lawn images to be trained, the parameters of the preset model are optimized to obtain an identification model.

The preset model is a preset network model. The network model may be set based on a convolutional neural network. Specifically, the label types of the lawn images to be trained may be used as the labels of the predicted types to train the preset model and optimize the parameters in the preset model so that the predicted type and the label type are more and more similar. When the preset condition is satisfied, for example, the degree of identity between the predicted type and the label type reaches 90%, the training stops to obtain the identification model. The identification model may be used for processing the lawn image to be identified and identifying the target type of the lawn image to be identified.

In this solution, noise and/or interference are added to the lawn images to be trained, thereby enriching the training samples and simulating as many possible situations in the actual scenario as possible; and the identification model is trained using richer training samples, thereby improving the identification accuracy of the identification model to a certain extent.

In an implementable example, at least part of the lawn images to be trained in the data set to be trained are subjected to one or more of the following combined processing to obtain the processed lawn images: blur processing, distortion processing, overexposure processing, adding pixel blocks, adding shadows of target objects, and adding preset objects.

Specifically, blurring processing of the lawn image to be identified may be achieved by using blur filters in image processing software or programming languages. The blur processing manner includes at least one of the following: the motion blur, depth of field (DOF) blur, rotational blur, zoom blur, Gaussian blur, mean blur, and median blur. The motion blur is caused by the movement of objects in the image or the movement of the camera. To simulate this effect, a blur effect may be achieved using random offsets or rotations of pixels. The DOF blur is a blur effect caused by the changing focal length of the camera lens. This effect may be simulated by blurring the background and foreground pixels in the image to varying degrees. The rotational blur may be simulated by rotating the image and applying a filter. The zoom blur is a blur effect caused by the image being zoomed in or out. This effect may be simulated by scaling the image and applying a filter.

Specifically, distortion processing of the lawn image to be identified may be achieved by using transformation functions in image processing software or programming languages. The distortion processing manner includes at least one of the following: the distortion transformation, shear transformation, rotation transformation, skew transformation, and affine transformation. The distortion transformation is a transformation manner in which pixels in the image are mapped. The distortion transformation can distort or deform a part of the image. This transformation may usually be achieved by defining a transformation matrix. The shear transformation is a transformation manner in which pixels in the image are shifted vertically or horizontally. This transformation may be achieved by translating the pixels horizontally or vertically. The rotation transformation is a transformation manner in which the image is rotated. The rotation transformation may be achieved by defining the center of rotation and the angle of rotation. The skew transformation is a transformation manner in which pixels in the image are shifted along a straight line. This transformation may be achieved by defining two shifted points. The affine transformation is a transformation manner in which pixels in the image are mapped. The affine transformation can distort or deform a part of the image. This transformation may be achieved by defining an affine matrix.

Specifically, the case where the vision sensor 130 is a camera is used as an example, and the overexposure processing of the image may be achieved by increasing the exposure time or increasing the International Organization for Standardization (ISO) sensitivity of the camera. The overexposure effect may be simulated by adjusting parameters such as the brightness, contrast, and color of the lawn image to be identified. The overexposure processing manner includes at least one of the following: increasing brightness, increasing contrast, color adjustment, highlight adjustment, and sharpening processing. Increasing brightness refers to simulating the overexposure effect by increasing the overall brightness of the image. Increasing brightness may be achieved using a brightness adjustment function in image processing software or programming languages. Increasing contrast refers to simulating the overexposure effect by increasing the contrast of the image. Increasing contrast may be achieved using a contrast adjustment function in image processing software or programming languages. Color adjustment refers to simulating the overexposure effect by adjusting the color of the image. Color adjustment may be achieved using a color adjustment function in image processing software or programming languages. Highlight adjustment refers to simulating the overexposure effect by increasing the highlight part of the image. Highlight adjustment may be achieved using a highlight adjustment function in image processing software or programming languages. Sharpening processing refers to simulating the overexposure effect by sharpening the edges and details of the image. Sharpening processing may be achieved using a sharpening function in image processing software or programming languages.

Specifically, pure color pixel blocks may be added to the lawn image to be trained.

Specifically, shadows of objects that may appear on the lawn may be added to the lawn image to be trained, or objects that may appear on the lawn may be added to the lawn image to be trained, thereby enriching the training samples; and then an identification model with higher identification accuracy is obtained through training based on richer training samples.

In an implementable example, the shadow of any of the following target objects is added to the lawn image to be trained: a tree, a fence, and a house.

In an implementable example, any one of the following preset objects is added to the lawn image to be trained: a water pipe, a faucet, a water gun, a toy, animal feces, fallen leaves, and branches.

In an implementable example, the lawn image to be trained includes a color image and/or a grayscale image.

In an example, in conjunction with FIGS. 2 and 3, the controller 150 is electrically connected to the vision sensor 130, and the controller 150 is configured to acquire a lawn image to be identified from the vision sensor 130 and use a preset identification model to process the lawn image to be identified to obtain a target type of the lawn image to be identified. The preset identification model is obtained by training the preset model using the lawn images to be trained and the processed lawn images; the lawn images to be trained have label types; and the processed lawn images are obtained by adding noise and/or interference to at least part of the lawn images to be trained.

Referring to FIG. 3, the controller 150 may include the acquisition unit 151 and the processing unit 152. Specifically, the vision sensor 130 may collect the lawn image to be identified, the acquisition unit 151 in the controller 150 acquires the lawn image to be identified from the vision sensor 130, and the processing unit 152 processes the lawn image to be identified using the preset identification model to obtain the target type of the lawn image to be identified.

In this solution, noise and/or interference are added to the lawn images to be trained to enrich the training samples, and the identification accuracy of the identification model obtained through training using richer training samples is higher. The lawn maintenance effect of the self-propelled mower can be improved to a certain extent using the identification model with higher identification accuracy.

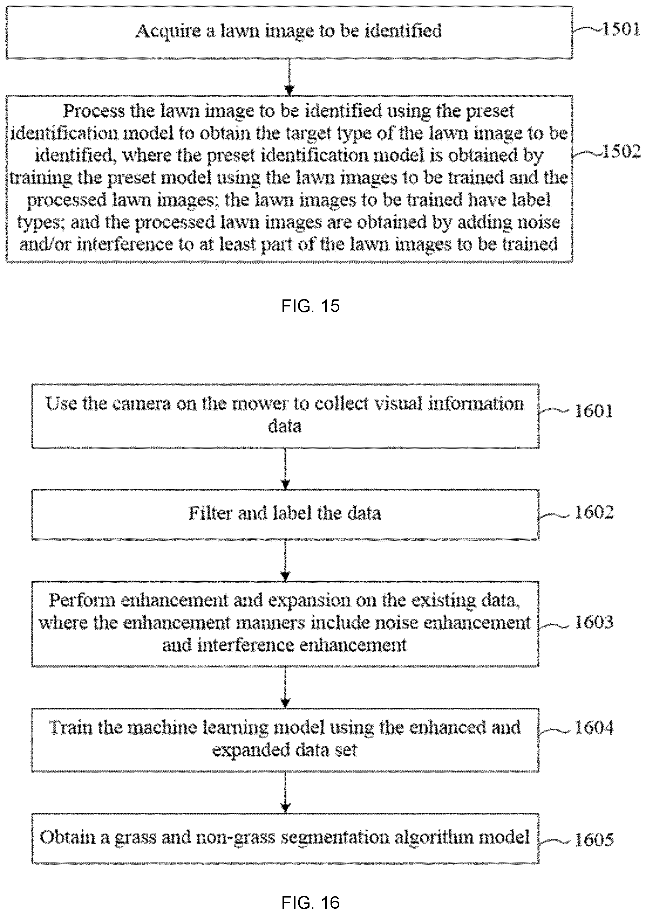

FIG. 15 is a flowchart of a lawn image processing method according to an example of the present application. This example is applicable to a scenario in which grass and non-grass objects in the lawn image are identified when the self-propelled mower 100 maintains the lawn. The method may be performed by the self-propelled mower 100. As shown in FIG. 15, the method includes the steps below.

In step 1501, a lawn image to be identified is acquired.

In step 1502, the lawn image to be identified is processed using the preset identification model to obtain the target type of the lawn image to be identified, where the preset identification model is obtained by training the preset model using the lawn images to be trained and the processed lawn images; the lawn images to be trained have label types; and the processed lawn images are obtained by adding noise and/or interference to at least part of the lawn images to be trained.

In this solution, noise and/or interference are added to the lawn images to be trained to enrich the training samples, and the identification accuracy of the identification model obtained through training using richer training samples is higher. The identification model with higher identification accuracy is used to identify grass and non-grass objects in the lawn image so that the lawn maintenance effect of the self-propelled mower can be improved to a certain extent.

The example of the present application further specifically provides a model training method based on data enhancement for the mower. FIG. 16 is a flowchart of a model training method based on data enhancement according to an example of the present application. Referring to FIG. 16, the specific process of the method is described below.

In step 1601, the camera mounted on the mower is used to collect visual information data, such as color images and grayscale images.

In step 1602, the data is filtered and labeled, where the labeling methods include, but are not limited to, a manual labeling method and an automatic labeling method.

In step 1603, data enhancement and expansion are performed on the labeled data, where the main enhancement manners include noise enhancement and interference enhancement, the noise enhancement manners include, but are not limited to, blurring, distortion, overexposure, and the like, and the interference enhancement manners include, but are not limited to, adding light and shadows, pure color pixel blocks, objects that may appear on the lawn, and the like.

In step 1604, the machine learning model is trained using the expanded data set after data enhancement.

In step 1605, after the training is completed, an algorithm model that can distinguish between grass and non-grass regions is obtained.

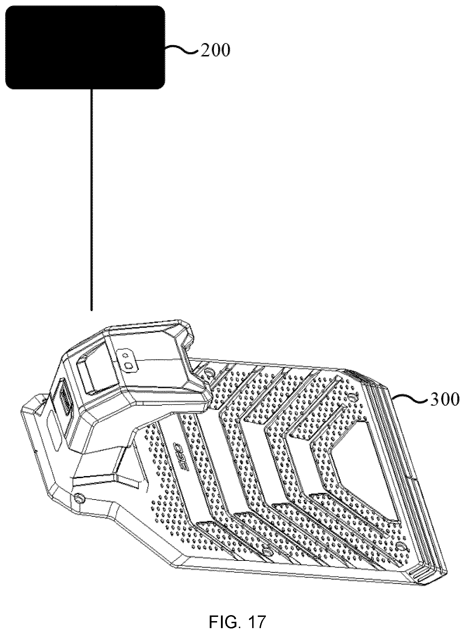

FIG. 2 is a structural view of a self-propelled mower 100 according to an example of the present application. FIG. 17 is a schematic view of a reference object 200 according to an example of the present application. Referring to FIGS. 2 and 17, the example of the present application provides a self-propelled mower system. The self-propelled mower system includes the self-propelled mower 100 and the reference object 200. The self-propelled mower 100 includes the body 110; the traveling wheel assembly 120 configured to support the body; and the vision sensor 130 mounted on the body and configured to acquire images of the surroundings of the self-propelled mower. In conjunction with FIGS. 2 and 3, the controller 150 is electrically connected to the vision sensor 130 and recognizes semantic information of the surroundings of the self-propelled mower 100 through the images. The reference object 200 is used for providing a reference for the controller, and the reference object 200 simulates at least one of the lawn, the ground, the water surface, and the sky.

In conjunction with FIGS. 2 and 17, the reference object may be mounted in a region that can be captured by the vision sensor 130, such as a wall, a tree trunk, or a charging pile.

Referring to FIG. 3, the controller 150 may include the acquisition unit 151 and the processing unit 152. Specifically, the vision sensor 130 may collect the images of the surroundings of the self-propelled mower 100, the acquisition unit 151 in the controller 150 acquires the images from the vision sensor 130, and the processing unit 152 acquires the reference information of the reference object 200 and recognizes the semantic information of the surroundings of the self-propelled mower 100 through the reference information and the images. Specifically, the vision sensor 130 may collect the image of the reference object 200; the acquisition unit 151 acquires the image of the reference object 200 from the vision sensor 130 and extracts the reference information of the reference object 200 from the image; the acquisition unit 151 may also acquire the real information of the reference object 200; the processing unit 152 transforms the images of the surroundings of the self-propelled mower 100 according to the real information and reference information of the reference object 200 to obtain transformed images; and the transformed images are processed by a semantic recognition program to obtain the semantic information of the surroundings of the self-propelled mower 100. The semantic recognition program may be a machine learning program, such as a smart recognition model based on machine learning; and the semantic information includes at least grass, grass types, non-grass objects, and the like.

In this solution, during the process of recognizing the semantic information of the surroundings of the self-propelled mower 100 through the images, in conjunction with the reference information of the reference object, the deviation between the visual information and the real information on the image is reduced, thereby improving the accuracy of semantic information recognition.

In an implementable example, referring to FIG. 17, the self-propelled mower system further includes a charging pile 300, and the reference object 200 is disposed on the charging pile 300.

The reference object 200 is disposed on the charging pile 300, thereby reducing the installation steps when the reference object 200 and the charging pile 300 are mounted separately.

In an implementable example, the reference object 200 has a geometric feature, and the geometric feature is used for assisting the controller 150 in identifying the reference object 200.

The processing unit 152 extracts geometric features from the images of the surroundings of the self-propelled mower 100. If the geometric feature is the target geometric feature, the target image corresponding to the geometric feature is determined as the reference object 200, and the reference information of the reference object 200 is extracted. The reference object 200 can be identified more conveniently and quickly through the geometric features. The target geometric feature may be a geometric plane shape feature or a solid geometric body feature. The target geometric feature includes, but is not limited to, an object feature such as a cube or a sphere with a certain special visual recognition structure. Specifically, the geometric features in the image may be extracted in at least one of the following manners: edge extraction and feature point extraction. Since the edges in the image are the regions with the most obvious local changes in the image, the geometric features of the image may be extracted by detecting these regions. In the edge extraction manner, the extreme value region of the first-order derivative is usually used to detect the edge, that is, by calculating the derivative of the image function in a certain direction, the region where the derivative changes to the extreme value is found out, and these regions are the edges of the image. Feature point extraction refers to finding out the feature points in the image, that is, points with obvious changes or special shapes in the image. For example, a corner point is the point of intersection of two sides in the image and usually has a larger curvature value than that in the surrounding region, so the geometric features may be extracted by detecting these points. Similarly, key points and spots are also regions with significant features in the image, and the geometric features may be extracted through these regions. Once the geometric features in the image are detected, descriptors may be used to describe these features. The descriptor may be a gray level co-occurrence matrix, a histogram of oriented gradients, the scale-invariant feature transform, a speeded-up robust feature, or the like. These descriptors may be used for comparing and matching feature points in the images for tasks such as image recognition, classification, and retrieval.

In an implementable example, the controller 150 is configured to identify the reference object 200 through the geometric features, extract the color features of the reference object 200, and transform the image according to the color features to obtain the transformed image.

The reference information provided by the reference object 200 for the controller 150 may be the color features. The color features of the reference object 200 include, but are not limited to, colors similar to natural references, such as the lawn color and sky color. After identifying the reference object 200 through the geometric features, the processing unit 152 in the controller 150 may extract the color feature of the reference object 200; the acquisition unit 151 in the controller 150 may acquire the real color information of the reference object 200; and the processing unit 152 may acquire the difference between the extracted color feature of the reference object 200 and the real color information and then subtract the difference from the color information of the image to obtain the transformed image.

The color feature is an important feature of the image. Changes in the outdoor working environment, such as changes in light, cause a deviation between the visual information and the real information of the image and mainly affect the color feature. Therefore, the difference between the extracted color feature of the reference object 200 and the real color feature is used as a transformation benchmark to transform the color feature of the image to reduce the deviation between the visual information and the real information of the image. The transformed image is used for smart identification, thereby improving the identification accuracy.

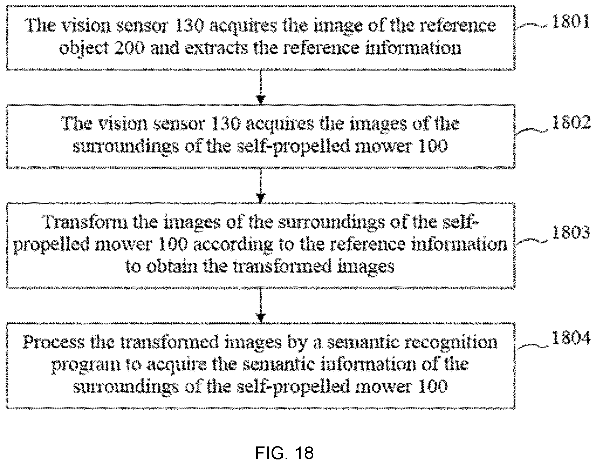

FIG. 18 is a flowchart of a control method for a self-propelled mower according to an example of the present application. This example is applicable to a scenario in which smart identification is performed on the images of the surroundings of the self-propelled mower 100 when the self-propelled mower 100 maintains the lawn. The method may be performed by the self-propelled mower 100. The self-propelled mower 100 includes the vision sensor 130. As shown in FIG. 18, the method includes the steps below.

In step 1801, the vision sensor 130 acquires the image of the reference object 200 and extracts the reference information.

In step 1802, the vision sensor 130 acquires the images of the surroundings of the self-propelled mower 100.

In step 1803, the images of the surroundings of the self-propelled mower 100 are transformed according to the reference information to obtain the transformed images.

In step 1804, the transformed images are processed by a semantic recognition program to acquire the semantic information of the surroundings of the self-propelled mower 100.

In this solution, the images of the surroundings of the self-propelled mower are transformed using the reference information of the reference object to obtain the transformed images, thereby minimizing the deviation between the visual information and the real information of the image; and the transformed images are used for smart identification, thereby improving the identification accuracy.

In an implementable example, the reference object is a known object in the natural environment.

The known object may be recognized by the semantic recognition program. The known object includes at least the lawn, ground, water surface, sky, or the like.

In an implementable example, the reference object is a manually set simulated object.

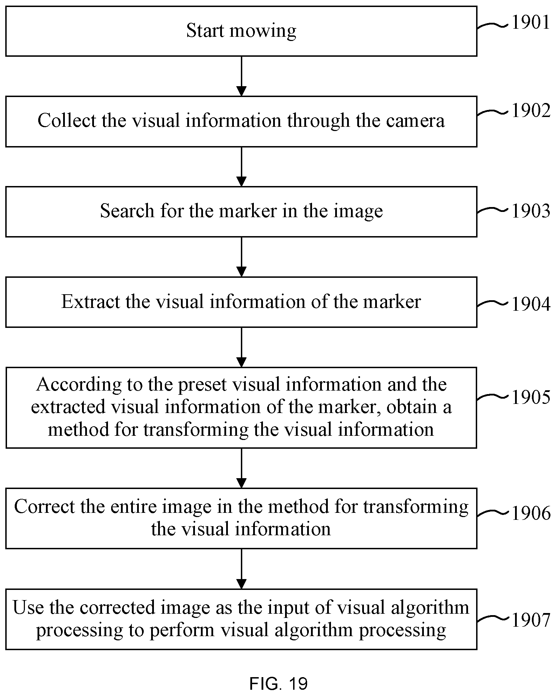

The example of the present application further provides a method for establishing a feature transformation benchmark based on a lawn marker for a mower equipped with a camera. FIG. 19 is a flowchart of a method for establishing a feature transformation benchmark based on a lawn marker according to an example of the present application. Referring to FIG. 19, the specific process of the method is described below.

In step 1901, the mower is powered on and starts mowing.

In step 1902, during the mowing process, the visual information on the lawn is collected through the camera.

In step 1903, the marker is searched in the image according to the preset geometric information of the marker.

In step 1904, the related visual information of the marker is extracted according to the marker found in the image.

In step 1905, a method for transforming the visual information is obtained according to the preset visual information and the extracted visual information of the marker.

In step 1906, the entire image is corrected in the obtained method for transforming the visual information.

In step 1907, the corrected image is used as the input of a visual processing algorithm to perform visual algorithm processing.

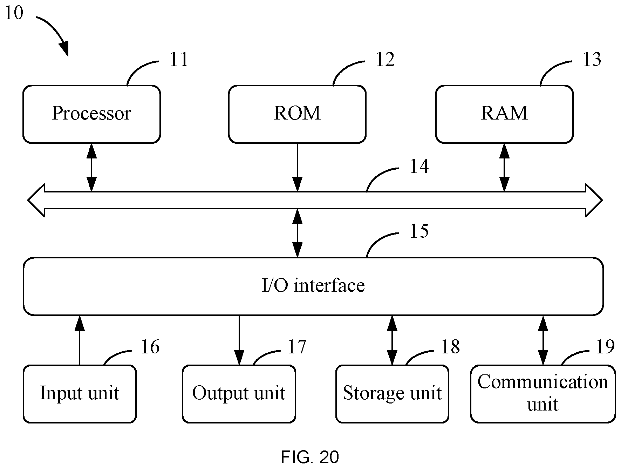

FIG. 20 is a structural diagram of an electronic device 10 that may be used for implementing the examples of the present application. The electronic device 10 may be a controller in the self-propelled mower 100, may be mounted on the vehicle body of the self-propelled mower 100, and may locally communicate with the vision sensor 130 and the attitude sensor 140 in the self-propelled mower 100. Alternatively, the electronic device 10 may be a remote server that remotely interacts with the vision sensor 130 and the attitude sensor 140 in the self-propelled mower 100. The electronic device 10 is intended to represent various forms of digital computers, for example, a laptop computer, a desktop computer, a workbench, a personal digital assistant, a server, a blade server, a mainframe computer, or another applicable computer. Electronic devices 10 may further represent various forms of mobile devices, for example, personal digital assistants, cell phones, smartphones, or wearable devices (such as helmets, glasses, or watches). Herein the shown components, the connections and relationships between these components, and the functions of these components are merely illustrative and are not intended to limit the implementation of the present application as described and/or claimed herein.

As shown in FIG. 20, the electronic device 10 includes at least one processor 11, and a memory communicatively connected to the at least one processor 11, such as a read-only memory (ROM) 12 or a random-access memory (RAM) 13, where the memory stores a computer program executable by the at least one processor, and the processor 11 may perform various appropriate actions and processing according to the computer program stored in the ROM 12 or the computer program loaded into the RAM 13 from a storage unit 18. Various programs and data required for the operation of the electronic device 10 are also stored in the RAM 13. The processor 11, the ROM 12, and the RAM 13 are connected to each other via a bus 14. An input/output (I/O) interface 15 is also connected to the bus 14.

Multiple components in the electronic device 10 are connected to the I/O interface 15. The multiple components include an input unit 16 such as a keyboard or a mouse, an output unit 17 such as various types of displays or speakers, the storage unit 18 such as a magnetic disk or an optical disc, and a communication unit 19 such as a network card, a modem, or a wireless communication transceiver. The communication unit 19 allows the electronic device 10 to exchange information/data with other devices over a computer network such as the Internet and/or various telecommunications networks.

The processors 11 may be various general-purpose and/or special-purpose processing components having processing and computing capabilities. Examples of the processor 11 include, but are not limited to, a central processing unit (CPU), a graphics processing unit (GPU), a special-purpose artificial intelligence (AI) computing chip, a processor executing machine learning models and algorithms, a digital signal processor (DSP), and any appropriate processor, controller, and microcontroller. The processor 11 executes various preceding methods and processing.

In some examples, any of the preceding methods may be implemented as a computer program tangibly contained in a computer-readable storage medium such as the storage unit 18. In some examples, part or all of computer programs may be loaded and/or installed onto the electronic device 10 via the ROM 12 and/or the communication unit 19. When the computer program is loaded onto the RAM 13 and executed by the processor 11, one or more steps of any of the preceding methods may be performed. Alternatively, in other examples, the processor 11 may be configured, in any other suitable manner (for example, by means of firmware), to perform any of the preceding methods.

It is to be understood that various forms of the preceding flows may be used, with steps reordered, added, or removed. For example, the steps described in the present application may be executed in parallel, in sequence, or in a different order as long as the desired results of the technical solutions of the present application can be achieved. The execution sequence of these steps is not limited herein.

The basic principles, main features, and advantages of the present application are shown and described above. It is to be understood by those skilled in the art that the preceding examples do not limit the present application in any form, and all technical solutions obtained through equivalent substitutions or equivalent transformations fall within the scope of the present application.

## Claims

1. A self-propelled device, comprising:
a body;
a traveling wheel assembly configured to support the body;
an inertial measurement unit (IMU) disposed in the body and comprising at least one of an accelerometer or a gyroscope; and
a controller electrically connected to the IMU and configured to:
control the self-propelled device to travel;
receive inertial data from the IMU; and
statistically analyze the inertial data received within a first time window and adjust a positioning parameter of the IMU according to a statistical result.

2. The self-propelled device of claim 1, wherein the statistical result reflects flatness of a road section passed by the self-propelled device within the first time window.

3. The self-propelled device of claim 1, wherein the positioning parameter is noise of the inertial data.

4. The self-propelled device of claim 1, wherein the positioning parameter is a weight of the inertial data when the inertial data is fused with data of other modalities for positioning.

5. The self-propelled device of claim 1, wherein a value range of the first time window is greater than or equal to a first duration threshold and less than or equal to a second duration threshold;
wherein the first duration threshold is less than the second duration threshold.

6. The self-propelled device of claim 1, wherein the first time window is determined according to a traveling speed of the self-propelled device.

7. A control method for a self-propelled device, comprising:
acquiring an attitude of the self-propelled device through an attitude sensor;
acquiring an image in a traveling direction of the self-propelled device through a vision sensor;
calculating a first angle of inclination of the ground in the traveling direction of the self-propelled device according to the image; and
calculating a second angle of inclination of the ground in conjunction with the first angle of inclination and the attitude, and according to the second angle of inclination, controlling whether the self-propelled device travels along the traveling direction.

8. The control method of claim 7, wherein the first angle of inclination is a relative angle of inclination of the ground relative to the self-propelled device, and the second angle of inclination is an absolute angle of inclination of the ground relative to a horizontal plane.

9. The control method of claim 7, wherein the vision sensor comprises at least one of a time-of-flight (ToF) depth camera, an infrared ray (IR) structured-light camera, and a binocular camera.

10. The control method of claim 9, wherein calculating the first angle of inclination of the ground in the traveling direction of the self-propelled device according to the image comprises: establishing a depth image from the image, extracting a ground point cloud from the depth image, and acquiring the first angle of inclination through the ground point cloud.

11. The control method of claim 7, wherein when the second angle of inclination is greater than or equal to a first threshold, determining that the ground in the traveling direction of the self-propelled device is a non-safe region and changes the traveling direction.

12. The control method of claim 11, wherein when the second angle of inclination is less than the first threshold, determining that the ground in the traveling direction of the self-propelled device is a safe region and maintains the traveling direction.

13. The control method of claim 11, wherein the first threshold is determined according to friction of the ground.

14. The control method of claim 7, wherein the traveling direction of the self-propelled device is a front of the self-propelled device.

15. The control method of claim 7, wherein the attitude sensor is an accelerometer disposed in a body of the self-propelled device.
